(19) Europäisches Patentamt
European Patent Office
Office européen des brevets

(11) EP 1 967 283 B1

(12) **EUROPEAN PATENT SPECIFICATION**

(45) Date of publication and mention of the grant of the patent:
**10.04.2013 Bulletin 2013/15**

(21) Application number: **06834784.8**

(22) Date of filing: **15.12.2006**

(51) Int Cl.:
***B05D 1/40*** *(2006.01)* ***G02C 7/10*** *(2006.01)*
***B05D 1/00*** *(2006.01)* ***B29D 11/00*** *(2006.01)*
***G02B 5/23*** *(2006.01)*

(86) International application number:
**PCT/JP2006/325041**

(87) International publication number:
**WO 2007/072754 (28.06.2007 Gazette 2007/26)**

(54) **METHOD OF SPIN COATING**

AUFSCHLEUDERVERFAHREN

PROCÉDÉ D 'ENDUCTION CENTRIFUGE

(84) Designated Contracting States:
**DE FR**

(30) Priority: **21.12.2005 JP 2005368561**

(43) Date of publication of application:
**10.09.2008 Bulletin 2008/37**

(73) Proprietor: **Tokuyama Corporation**
**Shunan-shi, Yamaguchi 745-8648 (JP)**

(72) Inventors:
- **MORI, Katsuhiro**
  **Shunan-shi, Yamaguchi 7458648 (JP)**
- **FUKADA, Noriyuki**
  **Shunan-shi, Yamaguchi 7458648 (JP)**

(74) Representative: **Matthews, Derek Peter**
**Dehns**
**St Bride's House**
**10 Salisbury Square**
**London**
**EC4Y 8JD (GB)**

(56) References cited:
**WO-A1-2004/078364** **JP-A- 2004 165 587**
**JP-A- 2005 013 873** **US-A- 5 571 560**
**US-A- 5 753 301** **US-A- 6 017 585**
**US-A1- 2003 044 530** **US-A1- 2004 142 105**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 967 283 B1

Printed by Jouve, 75001 PARIS (FR)

## Description

### Technical Field of the Invention

The present invention relates to a spin coating method for forming a uniform coating film on a surface of a photochronic eyeglass lens. In more detail, the present invention relates to a spin coating method by which, in forming a photochromic layer to an eyeglass lens substrate having a primer layer on the surface, incorporation of bubbles into the photochromic layer can be prevented.

### Background Art

Photochromic eyeglasses are eyeglasses which lenses are quickly colored in an outdoor irradiated with light containing UV rays such as sunlight to function as sunglasses and which are discolored in an indoor irradiated with no such light to function as ordinary transparent spectacles, and demands thereto grow larger in recent years.

As a method for producing a plastic lens having photochromic properties, there are known a method in which a photochromic compound is imbibed on a surface of a lens having no photochromic properties (imbibition method), a method in which a photochromic compound is dissolved in a monomer and the obtained solution is polymerized to directly obtain a photochromic lens (in mass method), and a method in which a layer having photochromic properties (hereinafter, referred to also as photochromic coating layer) is formed on a surface of a plastic lens by using a coating liquid containing a photochromic compound (hereinafter, referred to also as photochromic coating agent or simply as coating liquid) (coating method). Among these methods, the coating method has an advantage, compared to the other two methods, of that it can easily impart photochromic properties, in principle, to any lens substrate. For example, in the imbibition method, it is required to use a soft substrate in which the photochromic compound readily diffuses as a substrate lens, and in the in mass method, it is required to use a special monomer composition in order to attain excellent photochromic properties. On the other hand, in the coating method, there is no such restriction to substrates.

In the coating method, in general, there is adopted spin coating method in which, by dropping a coating liquid onto a surface of a lens substrate while the substrate is rotated along the central axis, the coating liquid is developed by centrifugal force during the rotation to form a uniform coating film.

In the spin coating method, it is necessary to always perform stable feed of the photochromic coating agent in a minimum required amount in order to prevent variation in thickness of the coating film between products as well as to suppress the production cost.

In forming a photochromic coating layer on a surface of a lens substrate, although the lens substrate may be directly coated with the coating liquid, in order to improve adhesion between the lens substrate of a various type, and the photochromic coating layer, it is preferable that the photochromic coating layer is formed after formation of a primer layer on the surface of the lens substrate. In this case, while the photochromic coating layer is dissolving the primer layer, the adhesion between the lens substrate and the photochromic coating layer is acquired. However, when an uncured photochromic coating agent and the primer layer are in contact with each other over a long period of time, the primer is dissolved so that the adhesion between the lens substrate and the photochromic coating layer is reduced and the uniformity of the primer layer is also impaired. In order to prevent such inconveniences, it is required that the step of dropping and spreading the photochromic coating agent is completed within a predetermined period of time. For this reason, it is desired that the operations from the dropping of approximately 1 g of the coating liquid to the curing is completed within 10 to 120 sec per lens substrate.

In other words, it is required to drop a predetermined amount of the coating liquid within a predetermined period of time in view of the industrial production. Therefore, manual dropping using a dropper, etc. should not be adopted in the industrial production.

In order to drop a predetermined amount of the coating liquid within a predetermined period of time, there is generally adopted a method in which the coating liquid filled in a barrel is discharged from a nozzle attached to the tip of the barrel for a predetermined period of time using air (nitrogen, etc.) with a constant pressure (Refer to Patent Document 1).

However, if discharging was continuously carried out for a large number of lens substrates, the coating liquid retained in the nozzle tip sometime dripped. In order to prevent the dripping, it is effective to install a check valve in the nozzle and to reduce the diameter of the nozzle.

[Patent Document 1] Japanese Patent Laid-open Publication No. 013873/2005

Further, US-6,017,585 A concerns a coating technique used in the IC fabrication process. The substrate is a silicone-wafer. The spin coating technique features use of a coating apparatus having a special coating head to overcome the defects of spin coating or meniscus-type coating, such as the waste of the precursor fluid, possible splashback or redeposition.

US-5,571,561 A concerns a coating technique of a soluble material such as a resist on the surface of a substrate

such as a wafer. The spin coating technique uses a dispensing arm having many nozzles.

US-2003/044530 A1 discloses a coating material having a viscosity of 150 mPa.s at 22-24°C in a spin coating process.

US 2004/142105 A1 shows a spin coating method of a photochromic eyeglass lens. Disclosed is a method to discharge liquid droplets of a coating material such that a homogenous coating layer is formed in a spin-coating process.

**Disclosure of the Invention**

**Problems to be Solved by the Invention**

In order to drop a predetermined amount of the coating liquid form a nozzle having a smaller diameter within a predetermined period of time, the discharging velocity (linear velocity) of the coating liquid is inevitably increased as compared to the case using a nozzle having a larger diameter. However, it was found that bubbles are frequently generated in the coating film formed if the linear velocity is increased.

As a reason of this phenomenon, although not theoretically restricted, there can be considered the following possibility: when a droplet discharged from the nozzle is falling, the tip portion is dented by influence of the air pressure in the surrounding and sucks air to form bubbles, and the bubbles trapped in the coating liquid remain even after the droplet reaches the surface of the substrate. If the wettability of the coating liquid to the surface of the substrate is high, even when bubbles have been trapped in the coating liquid, since the coating liquid immediately develops over the surface of the substrate, the bubbles are defoamed by flowing of the coating liquid in many cases. However, for the primer layer and the photochromic coating agent, such defoaming cannot be expected to occur because of the poor wettability.

In addition, the aforementioned photochromic coating layer is relatively thick and typically formed to have a thickness of approximately 40 μm. In order to form a coating film having such thickness, a coating liquid having a relatively high viscosity is used as the photochromic coating agent. If the coating liquid has such a high viscosity, the above-mentioned sucking of bubbles occurs more frequently during discharging.

Such bubbles have a diameter of approximately 10 μm, and the presence thereof can be confirmed by eyes. Therefore, particularly for an eyeglass lens, the commercial value is significantly lowered if bubbles are incorporated into the photochromic layer.

For this reason, there is demanded a technique for reducing or preventing incorporation of bubbles into the coating film formed in spin coating a surface of a substrate with a coating liquid having a high viscosity at a relatively high discharging velocity.

**Means to solve the Problems**

Means for solving the above-mentioned problems that the present invention provides are as follows:

(1) a spin coating method comprising discharging a coating liquid from the tip of a nozzle and dropping onto a surface of a rotating substrate to form a uniform coating film on the surface of the substrate, wherein the distance between the tip of the nozzle and the surface of the substrate during discharging of the coating liquid is 2.5 mm or less;
(2) the spin coating method according to (1), wherein the linear velocity during dropping of the coating liquid is 1 cm/sec or more;
(3) the spin coating method according to (1) or (2), wherein the viscosity of the coating liquid is in the range of 50 cP to 500 cP at 25°C;
(4) the spin coating method according to any one of (1) to (3), wherein the substrate is an eyeglass lens having a primer layer on the surface and the coating liquid comprises a curable composition containing a photochromic compound; and
(5) a method for producing a substrate with a cured film, comprising curing of a coating film on a substrate obtained by the spin coating method according to any one of above (1) to (4).

**Effects of the Invention**

According to the present invention, a spin coating method by which a uniform coating film can be formed on a surface of a substrate is provided. In particular, when a photochromic coating agent having a relatively high viscosity is discharged at a high velocity onto an eyeglass lens substrate having a primer layer on the surface to form a photochromic coating layer, incorporation of bubbles into the photochromic layer can be prevented.

## Brief Description of Drawings

[Figure 1] Figure 1 is a sectional view showing a representative embodiment of the coating method according to the present invention.

## Description of the Symbols

10 Nozzle
11 Barrel
20 Coating liquid
30 Substrate
31 Primer layer
40 Supporting device

## Best Mode for Carrying out the Invention

Hereinafter, embodiments of the present invention are specifically explained with reference to drawings.

In the spin coating method, as shown in Fig. 1, coating liquid 20 is discharged from the tip of nozzle 10 and the coating liquid is dropped onto the surface of substrate 30 which is rotating. Substrate 30 is supported on rotatable supporting device 40.

Nozzle 10 is connected to barrel 11 filled with coating liquid 20. There is provided a structure in which air pressure (nitrogen, etc.) is applied to barrel 11 to discharge a predetermined amount of coating liquid 20 at a constant velocity. In this structure, therefore, a predetermined amount of coating liquid 20 can be dropped onto the surface of the substrate within a predetermined period of time by controlling on and off of the air pressure. A check valve may be installed at the connecting part of barrel 11 and nozzle 10 in order to prevent dripping of the liquid.

Nozzle 10 has no particular limitation on its shape and it may be any of, so-called, a sharp nozzle, a curved nozzle, a tapered nozzle and a chamfered nozzle. In particular, a curved nozzle and a chamfered nozzle are preferable. From the view point of preventing dripping of coating liquid 20, the inner diameter of nozzle 10 is preferably 3.0 mm or less, more preferably 2.0 mm or less and especially preferably in the range of 1.6 mm to 0.5 mm. If the inner diameter is too large, the dripping is likely to occur even in a state where no air pressure is applied after completion of discharging. Meanwhile, if the inner diameter is too small, when a predetermined amount of the coating liquid is discharged within a predetermined period of time, the discharging pressure of the coating liquid becomes higher and therefore the linear velocity at the time of discharging is increased, to thereby increasing the possibility of incorporation of bubbles into the coating film.

In the present invention, the distance between the tip of nozzle 10 and the surface of substrate 30 during discharging the coating liquid is 2.5 mm or less, and preferably 2.0 mm or less, and it is preferably 0.3 mm or more and further preferably 0.5 mm or more. Therefore, when the coating liquid is dropped, the distance between the tip of nozzle 10 and the surface of substrate 30 is preferably set in the range of 1.5 to 0.5 mm, and especially in the range of 1.2 mm to 0.8 mm. If the distance between the tip of nozzle 10 and the surface of substrate 30 exceeds 2. 5 mm, the coating liquid traps bubbles during dropping, likely causing incorporation of bubbles into the coating film. If the tip of nozzle 10 and the surface of substrate 30 are too close to each other, the tip of the nozzle may touch and damage the surface of the substrate or may touch the surface of the coating film, thereby impairing the uniformity of the coated film. Moreover, during dropping of the coating liquid, the revolution of substrate 30 is preferably maintained relatively low (200 rpm or less, preferably at about 100 rpm). If the revolution of substrate 30 is too high, the droplets are likely to trap bubbles when it comes into contact with the surface of substrate 30, possibly causing to product failure.

In order to control the distance between the tip of nozzle 10 and the surface of substrate 30, either one or both of the feeding device (including barrel 11 and nozzle 10) of the coating liquid and supporting device 40 are held with a mechanism capable of moving up and down. Moreover, a means to automatically measure the distance between the tip of nozzle 10 and the surface of substrate 30 may be installed. Further, nozzle 10 may be held in such a manner that it is movable to the radial direction of substrate 30.

By discharging coating liquid 20 from the tip of nozzle 10 to drop it onto rotating substrate 30 under the above conditions, the coating liquid dropped onto the surface of substrate 30 is uniformly developed over the surface of substrate 30 by the centrifugal force caused by the rotation of substrate 30, and a coating film having a uniform thickness is obtained on the surface of substrate 30. If the wettability between coating liquid 20 and the surface of substrate 30 is poor, coating liquid 20 is sometimes retained in the vicinity of the parts where it was dropped. In this case, the coating liquid may be developed by rotating substrate 30 while contacting a brush or a soft film (PET film, etc.) with coating liquid

20. Further, after completion of dropping the coating liquid or after development of the coating liquid, it is preferable that the revolution of substrate 30 is increased in order to make the thickness of the coating film uniform. The revolution at this time, which depends on the viscosity of the coating liquid and other conditions, is typically 300 rpm or more, and preferably approximately 600 rpm. High-speed rotation of substrate 30 sometimes causes vibration thereof. In such a situation, if the distance between the tip of nozzle 10 and the surface of substrate 30 is maintained 0.7 mm or less, the tip of the nozzle may touch and damage the surface of the substrate or may touch the surface of the coated film, thereby impairing the uniformity of the coated film. Therefore, prior to the high-speed rotation of the substrate, the distance between the tip of nozzle 10 and the surface of substrate 30 is preferably increased to 0.7 mm or more. As mentioned above, either one or both of the feeding device (including the barrel 11 and the nozzle 10) of the coating liquid and supporting device 40 are held with a mechanism capable of moving up and down, thereby making it possible to adjust the distance between the tip of the nozzle and the surface of the substrate as appropriate. Further, nozzle 10 may be held in such a manner it is movable to the radial direction of substrate 30, and prior to the high-speed rotation of the substrate, nozzle 10 may be shifted from the above of substrate 30 so that the tip of the nozzle may move away to the position where it cannot touch the surface of the substrate.

As mentioned above, in general, as the discharging velocity (linear velocity) of the coating liquid increases, the possibility of incorporation of bubbles into the coating film increases. However, by adopting the above-mentioned conditions of the present invention, even though the discharging velocity of the coating liquid increases, incorporation of bubbles into the coating film can be prevented. Therefore, the methods of the present invention is preferably adopted particularly under the condition that the linear velocity of the coating liquid at the time of dropping is 1 cm/sec or more, further preferably 5 cm/sec or more, and especially 10 to 70 cm/sec. Needless to say, according to the present invention, incorporation of bubbles can be also prevented under the condition that the linear velocity of the coating liquid at the time of dropping is less than 1 cm/sec.

Here, the discharging velocity of the coating liquid refers to the discharging velocity of the coating liquid in the outlet position of the nozzle and can be calculated from the inner diameter of the nozzle, the discharging amount for once coating and the discharging time for once coating. The equation of the discharging velocity used in the present invention can be expressed as follows:

[Equation 1]

$$\text{Discharging velocity (cm/sec)} = \text{Discharging amount (cm}^3\text{)} / [(\text{Inner diameter of nozzle (mm)}/2)^2 \times \pi \times \text{Discharging time (sec)}]$$

The discharging velocity can be adjusted as appropriate by changing the inner diameter of nozzle 10, the air pressure applied to barrel 11 or the like. For example, if the inner diameter of the nozzle is reduced, the discharging velocity is increased in the case that the air pressure is the same. If the air pressure is increased, the discharging velocity is increased in the case that the inner diameter of the nozzle is the same.

Moreover, as mentioned above, in general, as the viscosity of the coating liquid increases, the possibility of incorporation of bubbles into the coating film increases. However, by adopting the above-mentioned conditions of the present invention, even though the viscosity of the coating liquid increases, the incorporation of bubbles into the coating film can be prevented. Therefore, the methods of the present invention can be preferably adopted particularly in spin coating with a coating liquid having a viscosity of 50 cP to 500 cP, more preferably 60 cP to 400 cP and especially preferably 70 cP to 300 cP at 25°C.

Here, the viscosity of the coating liquid was measured at 25°C using a Cannon-Fenske viscometer. The measurement was carried out in accordance with JISK2283, and the viscosity of the coating liquid was calculated from the kinetic viscosity obtained and the specific gravity of the sample determined in advance using the equation, Viscosity (cP) = Kinetic viscosity (cSt) × Specific gravity.

The viscosity of the coating liquid can be adjusted by selecting the type of composition and the composition ratio used in preparation of the coating liquid. If a composition having a low viscosity is added more, the viscosity of the coating liquid decreases.

As described above, the coating method of the present invention can be preferably employed particularly in spin coating with a coating liquid having a relatively high viscosity at a high discharging velocity.

Therefore, for example, as a method for producing a photochromic eyeglass lens in which a thick photochromic

layer is required to be formed, the coating method of the present invention is especially preferable. Hereinafter, the coating method of the present invention is more specifically explained for the case of application to production of a Photochromic eyeglass lens as an example.

In this case, a disc-shape substrate made of glass or resin, which is typically used as a lens, may be suitably used as substrate 30. In general, a plastic eyeglass lens has a curved surface and its convex surface often has a complicated curved shape due to the advancement of optical design in recent years. However, in the present invention, such an eyeglass lens may be used as substrate 30 without any problem.

Further, the adhesion to the substrate 30 may be further improved by modifying its surface to be coated using a publicly known method prior to coating with a coating liquid. The method for modification is not particularly limited, and there may be mentioned, for example, modification by discharge treatment such as plasma discharge treatment and corona treatment, modification by surface polishing using a polishing agent or the like and modification by immersing in a solution such as an alkaline solution.

In addition, particularly in order to improve the adhesion of the photochromic layer, the surface of substrate 30 is preferably provided with primer layer 31.

Primer layer 31 may formed from a variety of primer resins used in such type of application. If a photochromic coating agent (vi) described below is used, a urethane-based primer resin is particularly preferably used from the viewpoint of the adhesion to this coating agent. Such a urethane-based primer resin is described in detail in WO 2004/078476.

As the photochromic coating agent, there may be used various coating agents used in this technical field. Specifically there may be mentioned, for example,

(i) a photochromic coating agent comprising a photochromic compound dissolved in a urethane oligomer (refer to WO 1998/37115),

(ii) a photochromic coating agent comprising a photochromic compound dissolved in a polymerizable monomer composition which is a combination of a monofunctional, a bifunctional and a multifunctional radical-polymerizable monomers (refer to US Patent Publication No. 5914174),

(iii) a photochromic coating agent comprising a photochromic compound dissolved in a monomer composition composed of a combination of only two or more kinds of bifunctional (metha)acrylic monomers (refer to WO 2001/02449),

(iv) a photochromic coating agent comprising N-alkoxymethyl(meth)acrylamide, a catalyst (preferably an acidic catalyst) and a photochromic compound (refer to WO 2000/36047);

(v) a photochromic coating agent comprising a radical-polymerizable monomer having a silanol group or a group which generates a silanol group by hydrolysis, an amine compound and a photochromic compound in specific amounts respectively (WO 2003/011967 pamphlet),

(vi) a photochromic coating agent comprising a radical-polymerizable monomer component, a silicone-based or fluorine-based surfactant and a photochromic compound (refer to WO 2004/078476), and the like.

Among these, in particular, photochromic coating agent (vi) is preferably used from the viewpoint of the adhesion to the above-mentioned urethane-based primer resin.

However, when the surface of a lens substrate having the urethane-based primer layer is coated with photochromic coating agent (vi), the photochromic coating agent excessively dissolves the primer layer during long period of contact between an uncured photochromic coating agent and the primer layer, thereby impairing the uniformity of the primer layer. In order to prevent such inconvenience, the operation of dropping and spreading the coating solution is required to be completed within a constant period. For this reason, in the industrial mass production, approximately 1 g of the coating liquid is dropped within 5 sec to 30 sec per lens substrate. A discharging nozzle having a small diameter is used for preventing dripping of the liquid, and in order to drop a predetermined amount of the coating liquid from the nozzle having such a small diameter within a predetermined time period, the discharging velocity (linear velocity) of the coating liquid is inevitably increased compared to the case using a nozzle having a larger diameter,-and as a result, bubbles sometimes incorporate into the coating film.

Even in such a case, however, incorporation of bubbles into the coating film can be prevented by adopting the coating method of the present invention.

Subsequently, a substrate with a cured film can be obtained by curing the coating film formed on the substrate by an appropriate means. A means for curing the coating film is varied depending on the composition of the coating film. For example, in the case of photochromic coating agent (vi) described above, the curing is preferably carried out in combination of ultraviolet curing and thermosetting.

[Industrial Applicability]

The present invention provides a spin coating method by which a uniform coating film without bubbles can be

formed on a surface of a substrate. Particularly in spin coating an eyeglass lens substrate having a primer layer on the surface with a photochromic coating agent having a relatively high viscosity at a high discharging velocity to form a photochromic coating layer, incorporation of bubbles into the photochromic coating layer can efficiently be prevented. Accordingly, the method of the present invention can contribute to improvement of the productivity of a photochromic eyeglass lens.

(Examples)

Hereinafter, the present invention will be explained with reference to examples and comparative examples, but the present invention is not restricted to these examples.

Lens substrates and primer ingredients used in the present examples are shown below.

[Lens substrate]

CR (allylic resin plastic lens; refractive index = 1.50)
MRA (thiourethane-based resin plastic lens; refractive index = 1.60)
MRB (thiourethane-based resin plastic lens; refractive index = 1.67)
• TE (thioepoxy-based resin plastic lens; refractive index = 1.71)
• SPL (methacrylic resin plastic lens; refractive index = 1.54)
SE (lens of methacrylic resin + vinyl resin; refractive index = 1.60)

[Primer ingredient]

• moisture curing primer, "Takeseal PFR402TP-4", manufactured by Takebayashi Chemical Industry Co.,Ltd.
moisture curing primer, "Takeseal PFR4", manufactured by Takebayashi Chemical Industry Co.,Ltd.
• moisture curing primer, "Urethane Primer 06", manufactured by ALPS Chemicals Mfg. Co., Ltd.
• moisture curing primer, "Takenate M-402P", manufactured by Mitsui Takeda Chemicals Inc.
• moisture curing primer, "Barnock DM652", manufactured by Dainippon Ink and Chemicals, Incorporated

[Radical-polymerizable monomer]

• TEMPT: trimethylolpropane trimethacrylate
U6A: urethane oligomer hexaacrylate (Shin-Nakamura Chemical Co., Ltd.: U-6HA)
• EB6A: polyester oligomer hexaacrylate (Daicel-UCB Company Ltd.: EB-1830)
• GMA: glycidyl methacrylate
• BPE: 2,2-bis(4-methacryloyloxypentaethoxyphenyl)propane
• 9GDA: polyethylene glycol diacrylate (average molecular weight: 532)
• BPE-Oligo: 2,2-bis(4-acryloyloxypolyethyleneglycolphenyl)propane having an average molecular weight of 776

[Photochromic compound]

• PC1

[Formula 1]

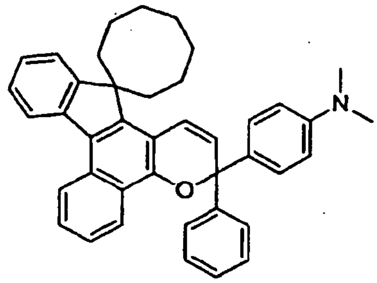

• PC2

[Formula 2]

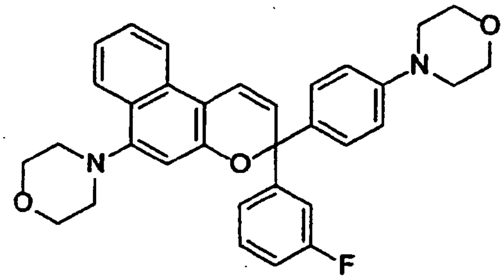

• PC3

[Formula 3]

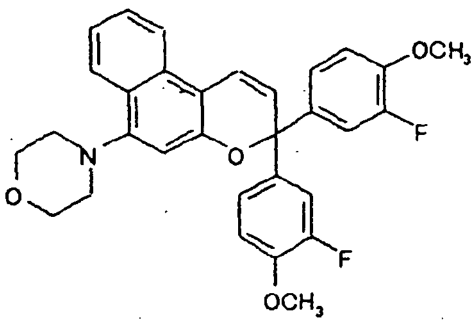

[Polymerization initiator]

CGI1800: mixture of 1-hydroxycyclohexyl phenyl ketone and bis(2,6-dimethoxybenzoyl)-2,4,4-trimethylpentylphosphine oxide (weight ratio; 3:1)

• CGI1870: mixture of 1-hydroxycyclohexyl phenyl ketone and bis(2,6-dimethoxybenzoyl)-2,4,4-trimethylpentylphosphine oxide (weight ratio; 3:7)

[Stabilizer]

- LS765: bis(1,2,2,6,6-pentamethyl-4-pyperidyl) sebacate [Leveling agent]
- SiL1: silicone-based surfactant "L7001" manufactured by Dow-Toray Corning Co., Ltd. • SiL2: silicone-based surfactant "FZ2104" manufactured by Dow-Toray Corning Co., Ltd.

[Silane coupling agent]

- TSL: γ-methacryloyloxypropyltrimethoxysilane

(Example 1)

CR (allylic resin plastic lens; refractive index = 1.50) was used as a lens substrate. This lens substrate was thoroughly degreased with acetone. A mixed liquid was prepared by mixing 50 parts by weight of each of a moisture curing primer "Takeseal PFR402TP-4" manufactured by Takebayashi Chemical Industry Co.,Ltd. as a primer and ethyl acetate. To the resultant mixed liquid, 0.03 parts by weight of a leveling agent "FZ2104" manufactured by Dow-Toray Corning Co., Ltd. was further added, and the resultant solution was thoroughly stirred under a nitrogen atmosphere until it became uniform to obtain primer composition (A). The surface of CR was spin coated with this composition using a spin coater 1H-DX2 manufactured by MIKASA Co., Ltd. The lens was subjected to curing at room temperature for 15 min to prepare a lens substrate having a primer layer.

Then, the surface of the above-mentioned lens substrate having the primer layer was spin coated with approximately 1 g of a photochromic polymerizable composition. The spin coating conditions at this time were as follows. The revolution of the lens substrate was maintained at 100 rpm for about 25 sec. During this period, the photochromic polymerizable composition, while discharged over 13 sec, was pushed and expanded toward the outer side of the lens substrate using a PET film (STEP 1). Subsequently, the revolution was increased from 100 rpm to 600 rpm over 6 sec (STEP 2), maintained at 600 rpm for 10 sec (STEP 3), and then decreased from 600 rpm to 0 rpm over 2 sec (STEP 4). The distance between the lens substrate and the dispenser nozzle was initially adjusted to 1 mm, and after completion of discharging the photochromic polymerizable composition, the dispenser nozzle was moved from the center of the lens substrate to the outside of the lens substrate while the distance was maintained at 1 mm. This movement of the dispenser nozzle was performed in the course of STEP 1.

Here, as a dispenser nozzle, there was employed a curved nozzle manufactured by SAN-EI TECH Ltd. having an inner diameter of 0.84 mm, through which approximately 1 g of the coating liquid was discharged onto the surface of the above-mentioned lens substrate having the primer layer over 13 sec. The discharging velocity of the coating liquid at this time was 14 cm/sec.

Composition (I) shown below was used as the photochromic polymerizable composition. A mixture was prepared by blending radical polymerizable monomers, 2,2-bis(4-methacryloyloxypentaethoxyphenyl)propane /polyethylene glycol diacrylate (average molecular weight; 532) / trimethylolpropane trimethacrylate / polyester oligomer hexaacrylate (Daicel-UCB Company, Ltd.: EB-1830)/ glycidyl methacrylate at the ratio of 40/15/25/10/10 parts by weight, respectively. To 100 parts of this mixture of radical polymerizable monomers, were added 2.0 parts by weight of a photochromic compound (PC1) having a structure represented by the following formula,

[Formula 4]

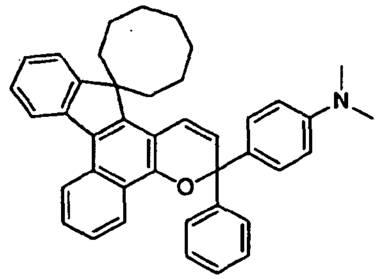

0.6 parts by weight of a photochromic compound (PC2) having a structure represented by the following formula, and

[Formula 5]

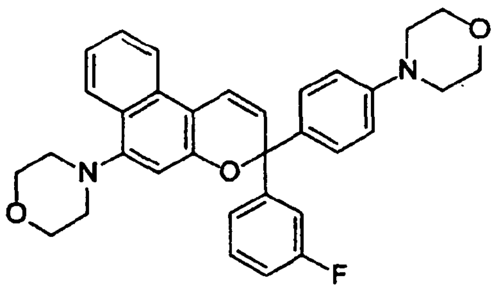

0.4 parts by weight of a photochromic compound (PC3) having a structure represented by the following formula.

[Formula 6]

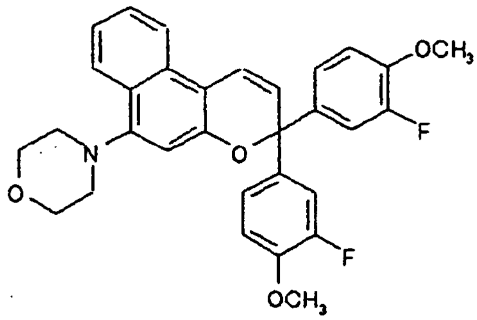

After the resultant mixture was thoroughly mixed, here were added 0.5 parts by weight of a polymerization initiator, CGI 1800 [mixture of 1-hydroxycyclohexyl phenyl ketone and bis(2,6-dimethoxybenzoyl)-2,4,4-trimethylpentylphosphine oxide(weight ratio; 3:1)], 5 parts by weight of a stabilizer, bis(1, 2, 2, 6, 6-pentamethyl-4-pyperidyl) sebacate, 7 parts by weight of a silane coupling agent, $\gamma$-methacryloyloxypropyltrimethoxysilane and 0.1 parts by weight of a leveling agent (silicon-based surfactant), "L-7001" manufactured by Dow-Toray Corning Co., Ltd., and the mixture was thoroughly mixed. The resultant photochromic polymerizable composition had a viscosity of 130 cP at 25°C.

Surface of this coated lens was irradiated with using a metal halide lamp whose output at 405 nm was adjusted to be 130 mW/cm$^2$ on the surface of the lens to cure the coating film for 3 min in a nitrogen gas atmosphere, and then was further subjected to a heating treatment in a thermostat at 120°C to obtain a photochromic cured thin film. The thickness of the thin film obtained can be adjusted depending on the condition of spin coating. In the present invention, the thickness of the photochromic cured thin film was adjusted to be 40$\pm$1 $\mu$m. The appearance of the lens substrate

having such prepared photochromic cured film was evaluated as follows: the lens substrate having the cured film was irradiated with light from a high pressure mercury lamp, the projection surface was displayed on white paper, the projection surface at the center of the lens (where the photochromic composition was first dispensed) was observed. The evaluation criteria are described below.

Good: No defects were observed.

Poor: Defects such as bubbles were observed.

The appearance of the lens substrate prepared by the above-mentioned method was evaluated as "good".

In addition, to evaluate photochromic properties of the lens substrate having the photochromic cured film, the color development concentration was measured by the following method.

The lens having the photochromic coating layer obtained was irradiated with a xenon lamp L-2480 (300 W) SHL-100 manufactured by Hamamatsu Photonics K.K. through a ultraviolet transmitting filter UV22 and a heat ray absorbing filter HA50 (both are manufactured by Hoya Corporation) with beam strengths of 2.4 $mW/cm^2$ at 365 nm and 24 $\mu W/cm^2$ at 245 nm on the polymer surface at 20°C ±1°C for 120 sec to develop color. The maximum absorption wavelength was measured for the lens with color developed here on a spectrophotometer (instantaneous multichannel photodetector MCPD 3000) manufactured by Otsuka Electronics Co., Ltd. The difference, $\varepsilon(120)$ - $\varepsilon(0)$, between the absorbance, e(120), at the maximum absorption wavelength measured above and the absorbance, $\varepsilon$ (0), at the same wavelength of the cured film in non-irradiated state was determined, and this value was referred to as the color development concentration. It can be regarded that a higher value means more excellent photochromic property.

The color development concentration of the lens substrate having the photochromic cured film prepared by the above-mentioned method was 1.05 at the maximum absorption wavelength of 588 nm, exhibiting excellent photochromic properties.

Subsequently, the adhesion of the lens having the photochromic cured film was evaluated. As the evaluation method, the lens substrate having the photochromic cured film was immersed in boiling water at 100°C for 1 hr, then cooled to room temperature, and the cross hatch test was conducted within 30 min. The evaluation criteria are described below.

A: No peeling
B: Peeling of less than 5%
C: Peeling of more than 5% and less than 15%
D: Peeling of 15% or more

The adhesion of the lens substrate prepared by the above-mentioned method was A.

(Examples 2 to 15)

By a similar method to that for preparing primer composition (A) in Example 1, the ingredients listed in Table 1 were mixed to obtain primer compositions (B) to (G). Next, by a similar method to that for preparing photochromic composition (I) in Example 1, the ingredients listed in Table 2 were mixed to prepare photochromic compositions (II) to (V). Then, by using the lens substrates, the primer compositions and the photochromic polymerizable compositions listed in Table 4, photochromic cured films were prepared and the appearance, the photochromic properties and the adhesion were evaluated by a similar method to Example 1, except that the coating condition, the distances between the lens substrate and the dispenser nozzle during coating with the photochromic polymerizable composition and the discharging velocity were changed as shown in Table 3. The results are summarized in Table 4.

(Comparative Examples 1 to 5)

By using the lens substrates, the primer compositions and the photochromic polymerizable compositions listed in Table 4, photochromic cured films were prepared, and the appearance, the photochromic properties and the adhesion were evaluated by a similar method to Example 1, except that the coating condition, the distances between the lens substrate and the dispenser nozzle during coating with the photochromic composition and the discharging velocity were changed as shown in Table 3. The results are summarized in Table 4.

[Table 1]

| Primer No. | Commercially available primer (parts by weight) | Dilution solvent (parts by weight) | Leveling agent (parts by weight) |
|---|---|---|---|
| A | Takeseal PFR402TP-4 50 | Ethyl Acetate | FZ-2104 0.03 |
| B | Takeseal PFR402TP-4 70 | Ethyl Acetate 30 | FZ-2104 0.015 |
| C. | Takeseal PFR402TP-4 60 | Ethyl Acetate / Butyl Acetate 15/15 | L-7001 0.03 |
| D | Takeseal PFR4 80 | Ethyl Acetate 20 | L-7001 0.03 |
| E | Takenate M-402P 50 | Ethyl Acetate 50 | FZ-2104 0.03 |
| F | Barnock DM652 75 | Ethyl Acetate 25 | FZ-2104 0.03 |
| G | Urethane Primer 06 80 | Ethyl Acetate 20 | L-7001 0.03 |

[Table 2]

| Example No. | Radical-polymerizable monomer (parts by weight) | Photochromic compound (parts by weight) | Polymerization initiator (parts by weight) | Stabilizer (parts by weight) | Silane coupling agent (parts by weight) | Leveling agent (parts by weight) | Viscosity at 25°C (cP) |
|---|---|---|---|---|---|---|---|
| I | BPE/9GDA/TMPT/EB6A/GMA 40/15/25/10/10 | PC1/PC2/PC3 2.0/0.6/0.4 | CGI1800 0.5 | LS765 5 | TSL 7 | L-7001 0.1 | 130 |
| II | BPE-Oligo/9GDA/TMPT/EB6A/ GMA 40/20/20/10/10 | PC1/PC2 2.1/0.5 | CGI1800 0.4 | LS765 5 | TSL **7** | L-7001 0.1 | 156 |
| III | BPE-Oligo/9GDA/TMPT/U6A/ GMA 20/40/10/20/10 | PC1/PC2/PC3 2.0/0.6/0.3 | CGI1800 0.4 | LS765 5 | TSL 7 | FZ-2104 0.15 | 110 |
| IV | BPE/9GDA/TMPT/EB6A/U6A/GMA 30/20/20/10/10/10 | PC1/PC2/PC3 1.7/0.5/0.5 | CGI1870 0.4 | LS765 5 | TSL 7 | L-7001 0.1 | 125 |
| V | BPE-Oligo /BPE/9GDA/ TMPT/EB6A/GMA 30/20/10/20/15/5 | PC1 2.3 | CGI1870 0.3 | LS765 5 | TSL 7 | L-7001 0.1 | 142 |

[Table 3]

| | STEP 1 | | | | | STEP 2 | | STEP 3 | STEP 4 |
|---|---|---|---|---|---|---|---|---|---|
| | Discharging velocity (cm/sec) | Revolution (rpm) | Retention time of revolution described left. (sec) | Distance (1) (mm) | Distance (2) (mm) | Revolution (rpm) | Reaching time to revolution described left (sec) | Retention time of revolution of STEP 2 (sec) | Time from revolution of STEP 3 to 0 rpm (sec) |
| Example 1 | 14 | 100 | 25 | 1.0 | 1.0 | 600 | 6 | 10 | 2 |
| Example 2 | 14 | 100 | 25 | 0.5 | 1.0 | 600 | 6 | 10 | 2 |
| Example 3 | 13 | 100 | 25 | 1.5 | 1.5 | 600 | 6 | 10 | 2 |
| Example 4 | 15 | 100 | 25 | 2.0 | 2.0 | 600 | 6 | 10 | 2 |
| Example 5 | 14 | 100 | 25 | 2.5 | 2.5 | 600 | 6 | 10 | 2 |
| Example 6 | 13 | 100 | 25 | 2.0 | 2.0 | 600 | 6 | 10 | 2 |
| Example 7 | 18 | 100 | 25 | 0.3 | 1.5 | 600 | 6 | 10 | 2 |
| Example 8 | 20 | 100 | 25 | 1.5 | 1.5 | 600 | 6 | 10 | 2 |
| Example 9 | 23 | 100 | 25 | 2.3 | 2.3 | 600 | 6 | 10 | 2 |
| Example 10 | 14 | 100 | 25 | 1.2 | 1.2 | 600 | 6 | 10 | 2 |
| Example 11 | 18 | 100 | 25 | 2.1 | 2.1 | 600 | 6 | 10 | 2 |
| Example 12 | 35 | 100 | 25 | 2.0 | 2.0 | 600 | 6 | 10 | 2 |
| Example 13 | 14 | 100 | 25 | 1.0 | 3.0 | 600 | 5 | 10 | 2 |
| Example 14 | 14 | 80 | 28 | 1.0 | 2.0 | 700 | 5 | 8 | 2 |
| Example 15 | 14 | 100 | 25 | 0.4 | 3.5 | 550 | 6 | 11 | 2 |
| Comparative Example 1 | 14 | 100 | 25 | 3.0 | 3.0 | 600 | 6 | 10 | 2 |
| Comparative Example 2 | 23 | 100 | 25 | 5.0 | 5.0 | 600 | 6 | 10 | 2 |
| Comparative Example 3 | 18 | 100 | 25 | 0.1 | 0.1 | 600 | 6 | 10 | 2 |

(continued)

| | STEP 1 | | | | | STEP 2 | | STEP 3 | STEP 4 |
|---|---|---|---|---|---|---|---|---|---|
| | Discharging velocity (cm/sec) | Revolution (rpm) | Retention time of revolution described left. (sec) | Distance (1) (mm) | Distance (2) (mm) | Revolution (rpm) | Reaching time to revolution described left (sec) | Retention time of revolution of STEP 2 (sec) | Time from revolution of STEP 3 to 0 rpm (sec) |
| Comparative Example 4 | 42 | 100 | 25 | 3.5 | 3.5 | 600 | 6 | 10 | 2 |
| Comparative Example 5 | 17 | 100 | 25 | 3.2 | 3.2 | 600 | 6 | 10 | 2 |

* Distance (1): the distance between the lens substrate and the dispenser nozzle during discharging the photochromic polymerizable composition
* Distance (2): the distance between the lens substrate and the dispenser nozzle when the dispenser nozzle is moved to the outside of the lens substrate after discharging the photochromic polymerizable composition

[Table 4]

| No. | Lens substrate | Primer composition | Photochromic composition | Appearance evaluation | Adhesion | Photochromic properties | |
|---|---|---|---|---|---|---|---|
| | | | | | | λ max (nm) | Color development concentration |
| Example 1 | CR | A | I | Good | A | 588 | 1.05 |
| Example 2 | CR | A | I | Good | A | 588 | 1.03 |
| Example 3 | CR | A | I | Good | A | 586 | 1.05 |
| Example 4 | CR | A | I | Good | A | 584 | 1.05 |
| Example 5 | CR | A | I | Good | A | 588 | 1.03 |
| Example 6 | MRA | A | I | Good | A | 588 | 1.04 |
| Example 7 | CR | B | I | Good | A | 588 | 1.07 |
| Example 8 | MRB | C | II | Good | A | 586 | 1.08 |
| Example 9 | TE | D | II | Good | A | 590 | 1.05 |
| Example 10 | SE | E | III | Good | A | 588 | 1.08 |
| Example 11 | SPL | F | IV | Good | A | 588 | 1.07 |
| Example 12 | MRB | G | V | Good | A | 594 | 1.11 |
| Example 13 | CR | A | I | Good | A | 588 | 1.03 |
| Example 14 | CR | A | I | Good | A | 588 | 1.05 |
| Example 15 | CR | A | I | Good | A | 586 | 1.05 |
| Comparative Example 1 | CR | A | I | Poor | A | 588 | 1.03 |
| Comparative Example 2 | CR | A | I | Poor | A | 588 | 1.04 |
| Comparative Example 3 | CR | A | II | Poor | A | 588 | 1.02 |
| Comparative Example 4 | MRA | B | III | Poor | A | 588 | 1.02 |
| Comparative Example 5 | SE | D | V | Poor | A | 592 | 1.09 |

As is clearly seen in the above examples, if the distance between the lens having the primer layer and the nozzle dispensing the photochromic polymerizable composition is 0.3 mm to 2.5 mm during discharging the photochromic composition, a lens substrate having a photochromic cured film excellent in appearance, photochromic properties and adhesion can be obtained.

On the other hand, as shown in the comparative examples, if the distance between the lens having the primer layer and the nozzle dispensing the photochromic polymerizable composition was 3.0 mm or more or if it was 0.1 mm or less, a poor appearance was observed in the area coated with the photochromic polymerizable composition, whereas the photochromic property and adhesion were still excellent.

## Claims

1. A method of producing a photochromic eyeglass lens comprising a lens substrate and a photochromic cured film, which method comprises

a step of forming, by spin coating, a coating film formed from a curable composition which has a viscosity at 25°C of 50 to 500 cP and contains a photochromic compound, wherein the spin coating is carried out in such a manner that a coating liquid containing the curable composition is dropped from the tip of a nozzle at a linear velocity of 10 cm/sec to 70 cm/sec onto a surface of a rotating lens substrate, and the distance between the tip of the nozzle and the surface of the lens substrate during dropping of the coating liquid is 2.5 mm or less, and
a step of curing the coating film.

**2.** The method of producing a photochromic lens according to claim 1, wherein the substrate has a primer layer on the surface.

**3.** The method of producing a photochromic lens according to claim 1 or 2, wherein in the spin coating, the coating liquid dropped onto the surface of the lens substrate is developed using a brush and a soft film.

## Patentansprüche

**1.** Verfahren zur Herstellung eines photochromatischen Brillenglases, das ein Brillenglassubstrat und einen photochromatischen gehärteten Film umfasst, wobei das Verfahren Folgendes umfasst:

einen Schritt der Ausbildung eines Beschichtungsfilms, der aus einer härtbaren Zusammensetzung ausgebildet ist, die bei 25°C eine Viskosität von 50 bis 500 cP aufweist und eine photochromatische Verbindung enthält, durch Schleuderbeschichten, wobei das Schleuderbeschichten derart erfolgt, dass eine die härtbare Zusammensetzung enthaltende Beschichtungsflüssigkeit mit einer linearen Geschwindigkeit von 10 cm/s bis 70 cm/s von der Spitze einer Düse auf eine Oberfläche eines sich drehenden Brillenglassubstrats getropft wird und der Abstand zwischen der Spitze der Düse und der Oberfläche des Brillenglassubstrats während des Auftropfens der Beschichtungsflüssigkeit 2,5 mm oder weniger beträgt, und
einen Schritt der Härtung des Beschichtungsfilms.

**2.** Verfahren zur Herstellung eines photochromatischen Brillenglases nach Anspruch 1, wobei das Substrat auf der Oberfläche eine Primerschicht aufweist.

**3.** Verfahren zur Herstellung eines photochromatischen Brillenglases nach Anspruch 1 oder 2, wobei beim Schleuderbeschichten die auf die Oberfläche des Brillenglassubstrats aufgetropfte Beschichtungsflüssigkeit unter Verwendung einer Bürste und einer weichen Folie entwickelt wird.

## Revendications

**1.** Procédé de production d'une lentille oculaire photochromique comprenant un substrat de lentille et un film durci photochromique, lequel procédé comprend
une étape de formation, par dépôt à la tournette, d'un film de revêtement formé d'une composition pouvant être durcie qui a une viscosité à 25 °C de 50 à 500 cP et qui contient un composé photochromique, dans lequel le dépôt à la tournette est effectué de telle sorte qu'un liquide de revêtement contenant la composition pouvant être durcie tombe depuis l'extrémité d'une buse à une vitesse linéaire de 10 cm/s à 70 cm/s sur une surface d'un substrat de lentille en rotation, et la distance entre l'extrémité de la buse et la surface du substrat de lentille pendant la chute du liquide de revêtement est de 2,5 mm ou moins, et
une étape de durcissement du film de revêtement.

**2.** Procédé de production d'une lentille photochromique selon la revendication 1, dans lequel le substrat a une couche d'amorce sur la surface.

**3.** Procédé de production d'une lentille photochromique selon la revendication 1 ou 2, dans lequel dans le dépôt à la tournette, le liquide de revêtement tombant sur la surface du substrat de lentille est étalé en utilisant une brosse et un film doux.

[Fig. 1]

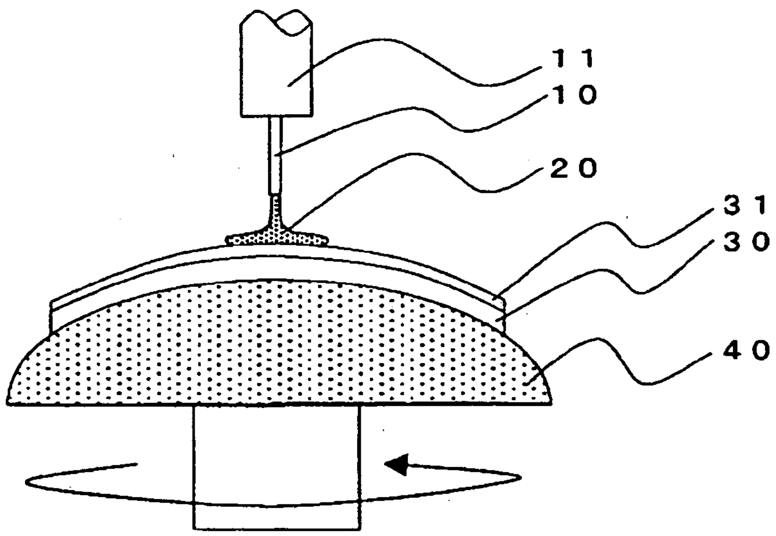

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2005013873 A
- US 6017585 A
- US 5571561 A
- US 2003044530 A1
- US 2004142105 A1
- WO 2004078476 A
- WO 199837115 A
- US 5914174 A
- WO 200102449 A
- WO 200036047 A
- WO 2003011967 A